## Europäisches Patentamt

## European Patent Office

## Office européen des brevets

(19)

(11) Veröffentlichungsnummer: **0 130 305**
**A1**

(12) # EUROPÄISCHE PATENTANMELDUNG

(21) Anmeldenummer: **84104737.6**

(22) Anmeldetag: **27.04.84**

(51) Int. Cl.⁴: **G 01 M 3/20**

(30) Priorität: **07.05.83 DE 3316765**

(43) Veröffentlichungstag der Anmeldung: **09.01.85**
**Patentblatt 85/2**

(84) Benannte Vertragsstaaten: **DE FR GB IT**

(71) Anmelder: **Leybold-Heraeus GmbH, Bonner Strasse 504 Postfach 51 07 60, D-5000 Köln 51 (DE)**

(72) Erfinder: **Grosse Bley, Werner, Ahrweg 3, D-5305 Alfter 4 (DE)**

(74) Vertreter: **Leineweber, Jürgen, Leybold-Heraeus GmbH Bonner Strasse 498 Postfach 51 07 60, D-5000 Köln 51 (DE)**

(54) Verfahren und Vorrichtung zur Lecksuche an Turbinengehäusen.

(57) Es wird ein Verfahren zur Lecksuche an einem Turbinengehäuse vorgeschlagen, in dem mittels einer Evakuierungseinrichtung ein Unterdruck aufrechterhalten wird. Zur Lecksuche werden die leckverdächtigen Stellen des Turbinengehäuses (1) mit einem Testgas, vorzugsweise Helium, besprüht.

Zur Feststellung der eventuellen Lecks wird das Abgas der Evakuierungseinrichtung (4, 5) mit Hilfe eines testgasempfindlichen Schnüffel-Lecksuchers (8, 9) überwacht; zweckmäßigerweise wird das für den Schnüffel-Lecksucher (8, 9) bestimmte Gas über einen Kondensatabscheider (7) angesaugt.

ACTORUM AG

- 1 -

Verfahren und Vorrichtung zur Lecksuche an Turbinengehäusen

Die Erfindung bezieht sich auf ein Verfahren zur Lecksuche an einem Turbinengehäuse, in dem mittels einer Evakuierungseinrichtung ein Unterdruck aufrechterhalten wird. Außerdem bezieht sich die Erfindung auf eine geeignete Vorrichtung zur Durchführung dieses Verfahrens.

Es ist bekannt, daß der dem Antrieb von Turbinen dienende Wasserdampf bis zu Unterdrücken entspannt wird, die in der Größenordnung von 50 mbar liegen. Mittels einer häufig über sehr lange Leitungen (z. B. 20 m) an das Turbinengehäuse angeschlossene Evakuierungseinrichtung (ein- oder zweistufige Vakuumpumpsysteme) wird dieser Wasserdampfdruck im Turbinengehäuse aufrechterhalten. Für eine ungestörte Funktion der Turbine und auch zur Vermeidung einer unnötigen Belastung der Evakuierungseinrichtung ist es wichtig, daß das Turbinengehäuse keine Leckstellen aufweist.

Es wäre denkbar, die Lecksuche an dem Turbinengehäuse derart vorzunehmen, daß an das Innere des Turbinengehäuses ein testgasempfindlicher Detektor angeschlossen wird und daß das Turbinengehäuse von außen mit einem Testgas besprüht wird. Im Falle eines Lecks dringt Testgas in das Turbinengehäuse ein, gelangt vorzugsweise durch Diffusion zur Eintrittsöffnung des Testgasdetektors und wird durch diesen registriert. Nachteilig an diesem Verfahren ist, daß sich wegen des Transportes des Testgases von der eindringenden Stelle zum Testgasdetektor durch Diffusion

- 2 -

0130305

nicht nur lange, sondern auch stark unterschiedliche Ansprechzeiten ergeben. Die Feststellung der Lage der Leckstellen ist deshalb äußerst schwierig.

Der vorliegenden Erfindung liegt die Aufgabe zugrunde, ein Verfahren der eingangs genannten Art anzugeben, bei dem die Ansprechzeiten wesentlich verkürzt sind und damit die Lecksuche an Turbinengehäusen wesentlich einfacher wird.

Erfindungsgemäß wird diese Aufgabe dadurch gelöst, daß die leckverdächtigen Stellen des Turbinengehäuses mit einem Testgas, vorzugsweise Helium, besprüht werden und daß das Abgas der Evakuierungseinrichtung mit Hilfe eines testgasempfindlichen Schnüfflers überwacht wird. Aufgrund dieser Maßnahme ist die Ansprechzeit wesentlich kürzer. Auch die Empfindlichkeit ist hoch. Der Grund dafür liegt darin, daß die Evakuierungseinrichtung bei dem im Turbinengehäuse herrschenden Druck einen laminaren Strom erzeugt, so daß durch ein Leck eintretendes Helium "als Wolke" angesaugt und im laminaren Strom gefördert wird. Es muß also nicht erst eine gleichmäßige (kleine) Helium-Konzentration im Turbinengehäuse aufgebaut werden, um eine Anzeige zu erhalten.

Vorzugsweise wird das für den Schnüffler bestimmte Gas durch einen Kondensatabscheider angesaugt, um den störenden Wasserdampf vom Schnüffellecksucher fernzuhalten.

Besonders vorteilhaft ist es, wenn man einen Massenspektrometer-Lecksucher verwendet, wie er in der DE-AS 24 41 124 beschrieben ist. Bei diesem Massenspektrometer-Lecksucher ist die Drosselstelle, die zum Betrieb des Massenspektrometers notwendig ist, unmittelbar vor dem Massenspektrometer selbst und nicht an der Sondenspitze angeordnet. Dieser Massenspektrometer-Lecksucher zeichnet sich auch bei langen Sondenschläuchen bzw. trotz vorgeschaltetem Kondensatabscheider-Totvolumen durch extrem kurze Ansprechzeiten aus.

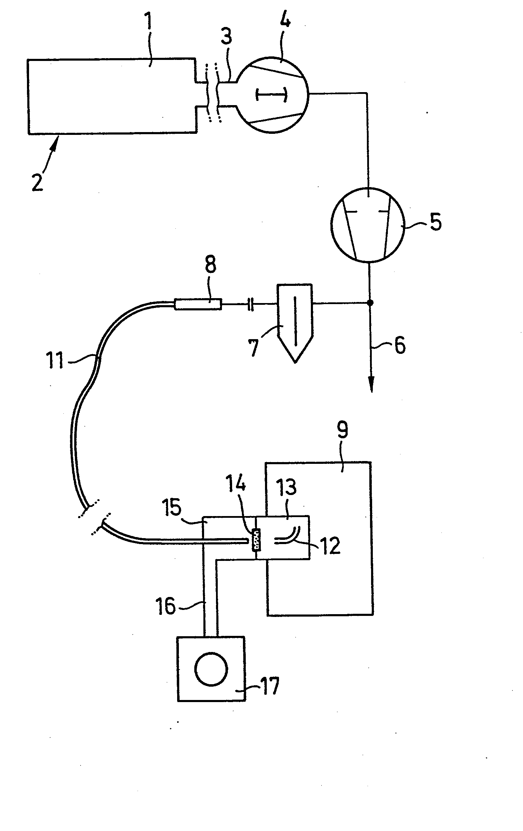

Weitere Vorteile und Einzelheiten der Erfindung sollen anhand eines in der Figur schematisch dargestellten Ausführungsbeispieles erläutert werden.

Mit 1 ist ein großvolumiges Turbinengehäuse bezeichnet, das beispielsweise bei 2 ein Leck aufweist. Über eine relativ lange (20 m und mehr) Leitung 3 ist an das Turbinengehäuse 1 eine Evakuierungseinrichtung angeschlossen, welche zweistufig ausgebildet ist und die Vakuumpumpstufen 4 (eine Wälzkolben-Vakuumpumpe) und 5 (eine Drehschieber-Vakuumpumpe) umfaßt. An die Abgasleitung 6 ist über den Kondensatabscheider 7 die Schnüffelspitze 8 des Lecksuchers 9 angeschlossen. Die Schnüffelspitze 8 und der Lecksucher 9 sind über die Sonde 11 miteinander verbunden.

Das Lecksuchgerät 9 ist als Massenspektrometer-Lecksucher ausgebildet. Das Massenspektrometer 12 befindet sich in einer Kammer 13, in der ein für den Betrieb eines Massenspektrometer-Lecksuchers notwendiger Druck (ca. $10^{-4}$ mbar) aufrechterhalten wird. Dem Massenspektrometer 12 vorgelagert ist die Drosselstelle 14, die bei diesem Ausführungsbeispiel von einem porösen Körper gebildet wird. Statt des porösen Körpers kann auch eine Blende, eine (poröse) Membran oder eine Düse vorgesehen sein.

Die Drosselstelle 14 trennt den Raum 13 von einem Raum 15 ab, der über die Leitung 16 an die Vakuumpumpe 17 angeschlossen ist. In diesen Raum 15 mündet außerdem der Sondenschlauch 11.

Um das Turbinengehäuse 1 auf Lecks zu untersuchen, wird es an den Stellen (Ecken, Verbindungsflanschen usw.), an denen Lecks auftreten können, mit Testgas besprüht. Dringt Testgas durch ein vorhandenes Leck 2 in das Innere des Turbinengehäuses, dann wird es als langsam in die Umgebung hinein diffundierende Wolke innerhalb der laminaren Strömung durch die Vakuumpumpen 4 und 5 in die Abgasleitung 6 gefördert. Das geschieht so schnell, daß die Konzentrationsabnahme innerhalb der Wolke noch gering bleibt. Mit Hilfe der Vakuumpumpe 17 wird ständig ein Teil des durch die Abgasleitung 6 strömenden Gases über den Kondensatabscheider 7 und durch den Sondenschlauch 11 in den Raum 15 gefördert. Das geschieht ebenfalls in einer relativ kurzen Zeit, da die Drosselstelle 14 dem Massenspektrometer 12 unmittelbar vorgelagert ist und deswegen ein schneller Gasstrom im Sondenschlauch 11 aufrechterhalten werden kann (vgl. auch die DE-AS 24 41 124). Mittels des Massenspektrometers 12, das auf das Testgas, vorzugsweise Helium, eingestellt ist, erfolgt dann die Registrierung.

Wegen der hohen Wasserdampfmenge im Gas ist die Zwischenschaltung des Kondensatabscheiders 7 erforderlich. Ohne Abscheider wäre die Funktion des Massenspektrometer-Lecksuchers 9 gestört (Verstopfung der Drosselstelle 14).

- 5 -

Verfahren und Vorrichtung zur Lecksuche an Turbinengehäusen

ANSPRÜCHE

1. Verfahren zur Lecksuche an einem Turbinengehäuse, in dem mittels einer Evakuierungseinrichtung ein Unterdruck aufrechterhalten wird, d a d u r c h g e k e n n z e i c h n e t , daß die leckverdächtigen Stellen des Turbinengehäuses (1) mit einem Testgas, vorzugsweise Helium, besprüht werden und daß das Abgas der Evakuierungseinrichtung (4, 5) mit Hilfe eines testgasempfindlichen Schnüffel-Lecksuchers (8, 9) überwacht wird.

2. Verfahren nach Anspruch 1, d a d u r c h g e k e n n z e i c h n e t , daß das für den Schnüffel-Lecksucher (8, 9) bestimmte Gas über einen Kondensatabscheider (7) angesaugt wird.

3. Verfahren nach Anspruch 2, d a d u r c h g e k e n n z e i c h n e t , daß der testgasempfindliche Schnüffel-Lecksucher (8, 9) als Massenspektrometer-Lecksucher ausgebildet ist und daß die für die Aufrechterhaltung des für den Betrieb des Massenspektrometers (12) notwendigen Druckes erforderliche Drosselstelle (14) dem Massenspektrometer unmittelbar vorgelagert ist.

4. Vorrichtung zur Durchführung des Verfahrens nach einem der vorhergehenden Ansprüche, g e k e n n - z e i c h n e t durch einen testgasempfindlichen Lecksucher (8, 9) und einen diesem vorgeschalteten Kondensatabscheider (7).

5. Vorrichtung nach Anspruch 4, d a d u r c h g e k e n n z e i c h n e t , daß der testgasempfindliche Schnüffel-Lecksucher (8, 9) als Massenspektrometer-Lecksucher nach der DE-AS 24 41 124 ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 645 127 (G.E. MONGODIN) * Spalte 2, Zeile 58 - Spalte 3, Zeile 45; Figur 2 * --- | 1-4 | G 01 M 3/20 |
| D,A | DE-B-2 441 124 (LEYBOLD-HERAEUS GMBH) * Ansprüche * ----- | 1-5 | |

RECHERCHIERTE SACHGEBIETE (Int. Cl. ³)

G 01 M 3/16
G 01 M 3/20

Der vorliegende Recherchenbericht wurde für alle Patentansprüche erstellt.

| Recherchenort BERLIN | Abschlußdatum der Recherche 15-08-1984 | Prüfer KOEHN G |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82